# FASCICULE DE BREVET EUROPEEN

(11) **EP 0 687 820 B1**
(45) Date de publication et mention de la délivrance du brevet: **11.08.1999**
(21) Numéro de dépôt: 95401381.9
(22) Date de dépôt: 14.06.1995
(51) Int. Cl.: F16B 13/06

(54) **Cheville à expansion avec bague de liaison d'une douille et d'un cône d'expansion**
Spreizdübel mit Verbindungsring einer Hülse und eines Spreizkegels
Expansion dowel with a connecting ring of a sleeve and an expansion cone

(30) Priorité: 16.06.1994 FR 9407366
(43) Date de publication de la demande: 20.12.1995
(73) Titulaire: SOCIETE DE PROSPECTION ET D'INVENTIONS TECHNIQUES SPIT, 26501 Bourg-Les-Valence Cédex (FR)
(72) Inventeur: Pourtier, Fabrice, F-26800 Portes Les Valence (FR); Barthomeuf, Jean-Paul, F-26300 Bourg de Peage (FR)
(74) Mandataire: Bloch, Gérard

(56) Documents cités:
- DE-A- 3 502 607
- DE-U- 8 606 008
- US-A- 4 688 977

## Description

La présente invention concerne une cheville à expansion comprenant une douille expansible avec une extrémité interne d'expansion et une extrémité externe de fixation, un cône d'expansion destiné, par une extrémité externe rétrécie, à être introduit dans l'extrémité d'expansion de la douille et y être entraîné vers son extrémité de fixation pour provoquer l'expansion de la douille et une bague de liaison du cône et de la douille après introduction de l'un dans l'autre, avec des moyens de fixation de la bague à l'extrémité d'expansion de la douille et des moyens de fixation du cône à la bague.

On connaît déjà une telle cheville, notamment par FR-A-2 351 299. Ce document enseigne plus précisément une bague de liaison qui permet de solidariser la douille et le cône lors des manutentions et la mise en place de la cheville dans un trou préalablement foré dans un matériau support. D'autres documents d'ailleurs enseignent également des moyens de liaison d'une douille et d'un cône d'une cheville à expansion, comme par exemple US-A-1 164 322, GB-A-1 297 334, DE-A-3 502 607.

Si la bague de liaison de FR-A-2 351 299 visait aussi à solidariser la douille et le cône dans une position axiale relative propre à assurer ensuite l'expansion, la demanderesse à cherché cette fois à faire jouer à la bague de liaison une deuxième fonction complètement différente : éviter que lors de l'entraînement du cône vers l'extrémité de fixation de la douille, par vissage d'un élément fileté de fixation dans le cône, alors que l'entraînement du cône dans la cheville de FR-A-2 351 299 s'effectue par frappe, la cheville ne soit entraînée en rotation dans le trou récepteur du matériau support.

Par DE-U-8606008, on connaît une cheville d'un type analogue, dans laquelle l'entraînement du cône dans la douille s'effectue par vissage d'un élément fileté de fixation. Les moyens de liaison de la douille et du cône comprennent un élastique de liaison. Mais avec ce type de cheville, il existe aussi un risque que, lors de l'entraînement du cône dans la douille, la cheville ne soit entraînée en rotation dans le trou récepteur du matériau support.

L'invention concerne donc la cheville de la revendication 1.

On notera tout d'abord qu'on a qualifié d'externes les moyens proches de l'embouchure du trou et d'internes ceux proches du fond du trou de réception de la cheville.

La bague de liaison de la cheville de l'invention se fixant à l'extrémité d'expansion de la douille par engagement sur celle-ci, et non dans celle-ci, avec une partie en saillie à l'extérieur, l'introduction de la cheville dans le trou doit donc s'effectuer légèrement à force avec, pour résultat, une contrainte exercée par la paroi du trou sur la bague et une pression des trois pièces de la cheville les unes sur les autres évitant l'entraînement en rotation de l'ensemble de la cheville lors du vissage d'expansion dans le cône.

Avantageusement, la bague de liaison et le cône d'expansion sont agencés pour pouvoir engager celui-ci dans celle-là.

Avantageusement encore, la bague de liaison comporte une extrémité interne d'accrochage à l'extrémité interne d'expansion de la douille et l'extrémité externe rétrécie du cône d'expansion comporte des moyens d'accrochage à l'extrémité externe de la bague de liaison.

De préférence, il est prévu des moyens d'encliquetage de la bague de liaison sur l'extrémité d'expansion de la douille.

Dans ce cas, il est avantageux que la bague de liaison comporte un bourrelet annulaire intérieur d'encliquetage et l'extrémité d'expansion de la douille comporte une gorge extérieure en contre-dépouille.

De préférence encore, il est prévu des moyens d'encliquetage du cône d'expansion sur la bague de liaison.

Dans ce cas, il est avantageux que le cône d'expansion comporte une gorge extérieure et la bague de liaison comporte au moins un ergot intérieur d'encliquetage.

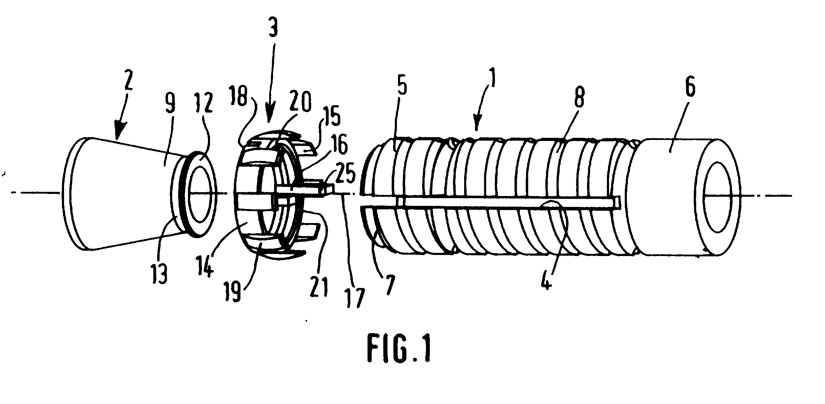

L'invention sera mieux comprise à l'aide de la description suivante de la forme de réalisation préférée de la cheville, en référence au dessin annexé, sur lequel
- la figure 1 représente une vue en perspective éclatée de la cheville;

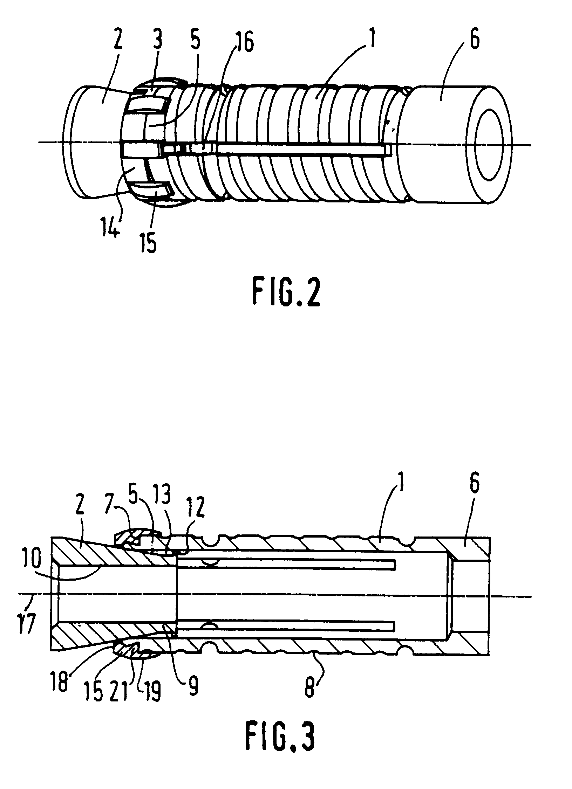

- la figure 2 représente une vue en perspective de la cheville en position d'assemblage;
- la figure 3 représente une vue de la cheville coupée selon un plan axial passant par des ergots extérieurs de mise en pression de la bague de liaison et

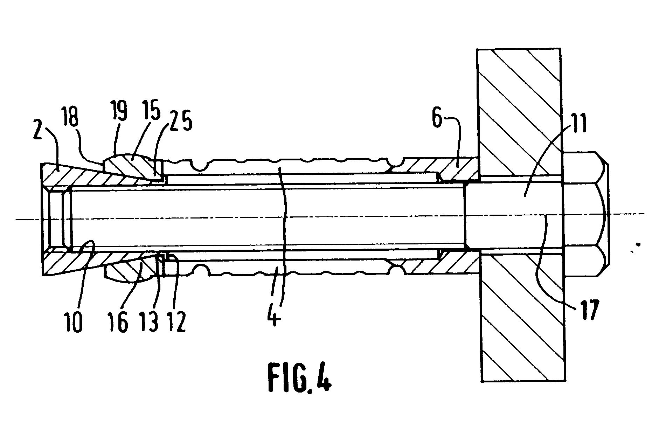

- la figure 4 représente une vue de la cheville coupée selon un plan axial passant par des ergots intérieurs d'encliquetage du cône d'expansion.

La cheville qui va maintenant être décrite comprend trois pièces : une douille expansible 1, un noyau conique d'expansion 2 et une bague 3 de liaison de la douille et du cône. La douille expansible 1, ici à cannelures circonférentielles 8, est fendue dans un plan axial et présente donc deux fentes longitudinales 4 d'expansion s'étendant depuis une portion d'extrémité interne d'expansion 5 jusqu'en deçà d'une portion d'extrémité externe de fixation 6. A l'extrémité de la portion d'expansion 5 est ménagée une gorge extérieure circonférentielle en contre-dépouille 7.

Le cône d'expansion 2, à portion externe rétrécie 9, comporte un alésage traversant taraudé 10 destiné à recevoir l'extrémité d'une vis de fixation 11 introduite par la portion d'extrémité de fixation 6 de la douille 1.

L'extrémité de la portion rétrécie 9 du cône 2 porte une petite collerette annulaire 12 ménageant, avec la partie adjacente de la portion rétrécie, une gorge extérieure 13.

La bague de liaison 3 comporte un anneau interne 14 avec une pluralité d'ergots extérieurs de mise en pression 15 et, ici, deux ergots intérieurs d'encliquetage 16. Les ergots 15 et 16 s'étendent parallèlement à l'axe 17 de la bague qui, en position d'assemblage de la cheville, est aussi l'axe du cône et de la douille.

S'étendant tous depuis le bord interne 18 de l'anneau 14, les ergots intérieurs 16 sont notablement plus long que les ergots extérieurs 15. Les ergots extérieurs 15 font latéralement saillie hors de l'anneau 14 par un bombage 19. Les ergots intérieurs 16, adjacents à des ergots extérieurs 15, s'évasent axialement et présentent une largeur radiale à leur extrémité externe 25 plus grande que leur largeur radiale interne. A l'intérieur du bord externe 20 de l'anneau 14 est ménagé un bourrelet annulaire intérieur d'encliquetage 21.

Après introduction du cône 2 dans la douille 1, le vissage dans le cône 2, de la vis 11, immobilisée en translation, de façon classique, entraîne le cône 2 vers la portion d'extrémité de fixation 6 de la douille pour provoquer son expansion.

L'assemblage de la cheville s'effectue de la manière maintenant décrite.

La bague 3 est engagée sur la portion d'extrémité d'expansion 5 de la douille 1 jusqu'à ce que le bourrelet intérieur 21 de l'anneau interne 14 s'accroche à la portion d'extrémité interne d'expansion 5 de la douille 1, par encliquetage du bourrelet 21 dans la gorge extérieure en contre-dépouille 7 de la douille. On engage ensuite le cône d'expansion 2, par sa portion externe rétrécie 9, dans la bague de liaison 3 jusqu'à ce que cette portion externe rétrécie 9 s'accroche à l'extrémité externe de la bague 3, par encliquetage de la gorge extérieure 13 et de la collerette 12 de la portion externe 9 du cône 2 sur l'extrémité externe de la bague, c'est-à-dire les extrémités externes 25 des ergots intérieurs 16.

Quand, après assemblage de la cheville, on l'introduit dans un trou d'ancrage, cette introduction doit s'effectuer légèrement à force à cause des bombages 19 des ergots extérieurs 15 de la bague 3. La contrainte ainsi exercée par la paroi du trou sur ces ergots extérieurs 15 se répercute sur la douille 1 et le cône 2, les trois pièces exerçant ainsi une pression les unes sur les autres, ce qui évite l'entraînement en rotation de l'ensemble de la cheville lors du vissage de la vis 11 dans le cône 2.

## Revendications

1. Cheville à expansion comprenant une douille expansible (1) avec une extrémité interne d'expansion (5) et une extrémité externe de fixation (6), un cône d'expansion (2) destiné, par une extrémité externe rétrécie (9), à être introduit dans l'extrémité d'expansion (5) de la douille et y être entraîné vers son extrémité de fixation (6), par vissage dans le cône (2) d'un élément fileté de fixation (11), pour provoquer l'expansion de la douille et une bague (3) de liaison du cône (2) et de la douille (1) après introduction de l'un dans l'autre, avec des moyens (21, 7) de fixation de la bague (3) à l'extrémité d'expansion (5) de la douille et des moyens (13,16) de fixation du cône (2) à la bague (3), caractérisée par le fait que la bague de liaison (3) est agencée pour être engagée sur l'extrémité d'expansion (5) de la douille (1) et faire latéralement saillie (19) hors de cette extrémité d'expansion (5).

2. Cheville selon la revendication 1, dans laquelle la bague de liaison (3) et le cône d'expansion (2) sont agencés pour pouvoir engager celui-ci (2) dans celle-là (3).

3. Cheville selon la revendication 2, dans laquelle la bague de liaison (3) comporte une extrémité interne (21) d'accrochage à l'extrémité interne d'expansion (5, 7) de la douille (1) et l'extrémité externe rétrécie (9) du cône d'expansion (2) comporte des moyens (12, 13) d'accrochage à l'extrémité externe (16, 25) de la bague de liaison (3).

4. Cheville selon l'une des revendications 1 à 3, dans laquelle il est prévu des moyens (21, 7) d'encliquetage de la bague de liaison (3) sur l'extrémité d'expansion (5) de la douille.

5. Cheville selon la revendication 4, dans laquelle la bague de liaison (3) comporte un bourrelet annulaire intérieur d'encliquetage (21) et l'extrémité d'expansion (5) de la douille (1) comporte une gorge extérieure en contre-dépouille (7).

6. Cheville selon l'une des revendications 1 à 5, dans laquelle il est prévu des moyens (12, 13, 16, 25) d'encliquetage du cône d'expansion (2) sur la bague de liaison (3).

7. Cheville selon la revendication 6, dans laquelle le cône d'expansion (2) comporte une gorge extérieure (13) et la bague de liaison (3) comporte au moins un ergot intérieur d'encliquetage (16).

## Patentansprüche

1. Spreizdübel mit spreizbarer Hülse (1) mit einem inneren Spreizende (5) und einem äußeren Befestigungsende (6), einem Spreizkegel (2), der dafür bestimmt ist, mittels eines äußeren verengten Endes (9) in das Spreizende (5) der Hülse eingeführt zu werden und dort zu ihrem Befestigungsende (6) hin mitgenommen zu werden, durch Schrauben eines mit einem Gewinde versehenen Befestigungselements (11) in den Kegel (2), um die Aufweitung der Hülse zu bewirkens und einem Ring (3) zum Verbinden des Kegels (2) und der Hülse (1) nach Einführen des einen in den anderen, mit Mitteln (21, 7) zum Befestigen des Ringes (3) am Spreizende (5) der Hülse und Mitteln (13, 16) zum Befestigen des Kegels (2) an dem Ring (3), gekennzeichnet dadurch, daß der Ring (3) zum Verbinden eingerichtet ist, um auf dem Spreizende (5) der Hülse eingesetzt zu werden und seitlich einen Vorsprung (19) außerhalb dieses Spreizendes (5) zu bilden.

2. Dübel gemäß Anspruch 1, bei dem der Ring (3) zum Verbinden und der Spreizkegel (2) eingerichtet sind. um den einen (2) in den anderen (3) einzusetzen.

3. Dübel gemäß Anspruch 2, bei dem der Ring (3) zum Verbinden ein inneres Ende (21) zum Verhaken an dem inneren Spreizende (5. 7) der Hülse (1) hat und das äußere, verengte Ende (9) des Spreizkegels Mittel (12, 13) zum Verhaken am äußeren Ende (16, 25) des Ringes (3) zum Verbinden hat.

4. Dübel gemäß einem der Ansprüche 1 bis 3, bei dem Mittel (21, 7) zum Verrasten des Ringes (3) zum Verbinden auf dem Spreizende (5) der Hülse vorhanden sind.

5. Dübel gemäß Anspruch 4, bei dem der Ring (3) zum Verbinden einen innen angeordneten, ringförmigen Wulst (21) zum Verrasten und das Spreizende (5) des Dübels (1) eine außen angeordnete Hinterschnittrille (7) aufweist.

6. Dübel gemäß einem der Ansprüche 1 bis 5, bei dem Mittel (12, 13, 16, 25) zum Verrasten des Spreizkegels (2) auf dem Ring (3) zum Verbinden vorhanden sind.

7. Dübel gemäß Anspruch 6, bei dem der Spreizkegel (2) eine außen angeordnete Rille (13) und der Verbindungsring (3) zumindest einen innen angeordneten Vorsprung (16) zum Verrasten aufweist.

## Claims

1. Expansion bolt comprising an expansible sleeve (1) with an inner expansion end (5) and an outer fixing end (6), an expansion cone (2) intended to be introduced via a narrowed outer end (9) into the expansion end (5) of the sleeve and to be driven therein towards its fixing end (6) by screwing a threaded fixing element (11) into the cone (2) in order to cause expansion of the sleeve, and a ring (3) for connecting the cone (2) and the sleeve (1) once one has been introduced into the other, with means (21, 7) for fixing the ring (3) to the expansion end (5) of the sleeve and means (13, 16) for fixing the cone (2) to the ring (3), characterised in that the connecting ring (3) is adapted to be engaged on the expansion end (5) of the sleeve (1) and to project laterally (19) beyond this expansion end (5).

2. Bolt according to claim 1, in which the connecting ring (3) and the expansion cone (2) are adapted to be able to engage the latter (2) into the former (3).

3. Bolt according to claim 2, in which the connecting ring (3) includes an inner end (21) for coupling to the inner expansion end (5, 7) of the sleeve (1) and the narrowed outer end (9) of the expansion cone (2) includes means (12, 13) for coupling to the outer end (16, 25) of the connecting ring (3).

4. Bolt according to one of claims 1 to 3, in which means (21, 7) are provided for snapping the connecting ring (3) on to the expansion end (5) of the sleeve.

5. Bolt according to claim 4, in which the connecting ring (3) includes an inner annular snap bead (21) and the expansion end (5) of the sleeve (1) includes an outer undercut groove (7).

6. Bolt according to one ofclaims 1 to 5, in which means (12, 13, 16, 25) are provided for snapping the expansion cone (2) on to the connecting ring (3).

7. Bolt according to claim 6, in which the expansion cone (2) includes an outer groove (13) and the connecting ring (3) includes at least one inner snap pin (16).
